# EUROPÄISCHE PATENTSCHRIFT

(11) **EP 1 711 363 B1**
(45) Veröffentlichungstag und Bekanntmachung des Hinweises auf die Patenterteilung: **07.04.2010**
(21) Anmeldenummer: 05715239.9
(22) Anmeldetag: 02.02.2005
(51) Int. Cl.: B60K 6/445, B60K 6/485, B60K 6/383

(54) **HYBRIDMOTOR**
HYBRID ENGINE
MOTEUR HYBRIDE

(30) Priorität: 02.02.2004 DE 102004005349
(43) Veröffentlichungstag der Anmeldung: 18.10.2006
(73) Patentinhaber: FEV Motorentechnik GmbH, 52078 Aachen (DE)
(72) Erfinder: JANSSEN, Peter, 6051 JV Maasbracht (NL)
(74) Vertreter: Maxton Langmaack & Partner
(86) Internationale Anmeldenummer: PCT/EP2005/001012
(87) Internationale Veröffentlichungsnummer: WO 2005/073005

(56) Entgegenhaltungen:
- EP-A- 1 090 794
- EP-A- 1 701 061
- DE-A1- 19 909 424
- US-B1- 6 302 227
- PATENT ABSTRACTS OF JAPAN Bd. 2000, Nr. 06, 22. September 2000 (2000-09-22) & JP 2000 092611 A (TOYOTA MOTOR CORP), 31. März 2000 (2000-03-31)

## Beschreibung

Die vorliegende Erfindung betrifft einen Hybridmotor mit einer Verbrennungskraftmaschine und mit einem Elektromotor, die über ein Planetengetriebe miteinander in Verbindung stehen. Weiterhin wird ein Verfahren zum Betreib einer derartiger Hybridmaschine vorgestellt.

Bisher gibt es viele Hybridkonzepte, die alle ihre spezifische Vor- und Nachteile haben. Meist sind diese Systeme aufwendig konstruiert oder weisen nur in bestimmten Betriebspunkten Vorteile auf im Vergleich zu herkömmliche Antriebsstränge. Oft sind diese Konzepte nur für den Verbrauchszyklus optimiert. Im normalen Straßenbetrieb dagegen sind die Vorteile weitaus geringer. In diesen Konzepten wurden bereits Automatische und automatisierte Getriebe vorgesehen.

Beispielsweise geht aus DE 100 36 966 A1 ein Aufbau eines Hybridmotors hervor, der eine Planetengetriebeverschaltung mit mehreren Zwischengliedern, Getrieben und Kupplungen vorsieht, um einen Elektromotor und eine Verbrennungskraftmaschine zu koppeln. Auch aus der DE 100 49 514 A1 geht ein Hybridmotor hervor, der einen Elektromotor und eine Verbrennungskraftmaschine aufweist. In das Planetengetriebe sind zwei Kupplungen sowie eine Bremse integriert, wobei über die erste Kupplung und die zweite Kupplung der Elektromotor mit der Verbrennungskraftmaschine starr gekoppelt werden kann.

Die JP 2000-092 611 A zeigt die Merkmale des Oberbegriffes des Anspruches 1.

Aufgabe der vorliegenden Erfindung ist es, einen kompakten Hybridmotor zur Verfügung zu stellen sowie ein Verfahren zu dessen Betrieb.

Diese Aufgabe wird gelöst mit einem Hybridmotor mit den Merkmalen des Anspruches 1 sowie mit einem Verfahren zum Betrieb eines Hybridmotors mit den Merkmalen des Anspruchs 16. Weitere vorteilhafte Ausgestaltungen und Weiterbildungen sind in den jeweiligen abhängigen Ansprüchen angegeben.

Es wird ein Hybridmotor mit einem Verbrennungskraftmaschine und mit einem Elektromotor vorgeschlagen, die über ein Planetengetriebe miteinander in Verbindung stehen, wobei eine Kupplung derart angeordnet ist, dass die Verbrennungskraftmaschine und der Elektromotor über ein Sonnenrad und einem Planetenträger miteinander verbunden sind. Vorzugsweise ist die Kupplung zwischen einer Kopplung zu einem Getriebeeingang insbesondere eines Automatikgetriebes und dem Planetengetriebe angeordnet. Gemäß einem weiteren Gedanken der Erfindung wird ein Hybridmotor mit einer Verbrennungskraftmaschine und mit einem Elektromotor vorgeschlagen, die mittels einer Kupplung verblockbar sind und über ein Planetengetriebe miteinander in Verbindung stehen, wobei das Planetengetriebe doppelte Planetenträger aufweist.

Gemäß einer Weiterbildung ist die Kupplung zwischen dem Automatikgetriebe und dem Planetengetriebe angeordnet.

Vorzugsweise ist die Kupplung in das Planetengetriebe integriert, wobei die Kupplung von einem Hohlrad des Planetengetriebes umgeben ist. Gemäß einer Ausgestaltung stützt sich das Hohlrad auf einer Welle ab, die in direkter Verbindung mit einem Getriebeeingang des Automatikgetriebes steht. Vorzugsweise ist die Welle der Getriebeeingang. Eine weitere Ausgestaltung sieht vor, dass die Kupplung das Sonnenrad und den Getriebeeingang des Automatikgetriebes direkt miteinander verbindet.

Gemäß der Erfindung ist der Elektromotor mit dem Sonnenrad verbunden und die Verbrennungskraftmaschine mit dem Planetenträger.

Die vorgeschlagene Lösung verbindet Verbrennungskraftmaschine, Elektromotor und Getriebe mit einem Planetensatz, der einem Automatgetriebe vorgeschaltet wird. Das Konzept wird im folgenden beispielhaft an Hand einer Anwendung mit CVT-Getriebe erläutert, aber ist auch auf andere Getriebe und Motorkonzepte übertragbar. Das Konzept kann als Anfahrelement mit hoher Drehmomentenverstärkung (geared neutral concept), als Anlasser, Generator, Booster, Hillholder, Rückwärtsgang und zum regenerativen Bremsen eingesetzt werden. Außerdem verhält sich das System beim wesentlicher Teil des Anfahrvorgangs weitgehend als massenträgheitslos.

Das Getriebe weist einen Planentensatz mit vorzugsweise doppelten Planetenrädern auf. Es kann jedoch auch eine Reihe Planetenräder zwischen dem Sonnenrad und dem Hohlrad vorgesehen werden. Für die Erläuterungen insbesondere der nachfolgenden Figuren ist eine Planetensatz-Übersetzung von Sonne zu Hohlrad von -1 gewählt. Auch diese Übersetzung kann je nach Anforderung angepasst werden.

Vorzugsweise ist das Automatikgetriebe mit einer Welle der Kupplung ohne Zwischenschaltung eines Drehmomentenwandlers direkt verbunden. Weiterhin ist vorgesehen, dass optional eine elektrische Ölpumpe zur Versorgung des Automatikgetriebes mit Öl eingesetzt wird. Der Elektromotor dient insbesondere zumindest als Anlasser und als Booster. Vorzugsweise ist der Elektromotor in der Lage, als Generator eingesetzt zu werden. Insbesondere ist der Elektromotor als 4-Quadranten-Maschine ausgelegt. Dieses erlaubt, dass der Elektromotor in unterschiedliche Richtungen drehen kann und jeweils als Generator oder als Antrieb einsetzbar ist.

Gemäß einer weiteren Ausgestaltung weist der Hybridmotor das Automatikgetriebe ohne einen Rückwärtsgang auf. Vielmehr erlaubt die Verbindung von Elektromotor, Verbrennungskraftmaschine, Planetengetriebe, Kupplung und Kopplung mit dem Getriebeeingang, dass über eine Änderung der Drehzahl des Elektromotors eine Änderung der Drehrichtung des Getriebeeingangs erzielt werden kann. Insbesondere ist dadurch eine Rückwärtsfahrt allein mittels des Elektromotors möglich, insbesondere durch dessen Einstellung.

Eine Weiterbildung sieht vor, dass eine Überwachung eines Betriebszustandes der Batterie vorgesehen ist. Beispielsweise ist die Überwachung derart ausgelegt, dass die Batterie zu jeder Zeit ein Minimum an gespeicherter Energie für eine Rückwärtsfahrt bzw. für eine Vielzahl von Startvorgängen aufweist. Insbesondere kann ein Minimum eines für den Speichergehalt der Batterie charakteristischen Wertes wie beispielsweise eine Spannung oder Kapazität überwacht werden. Ein oder mehrere Werte können dabei vorgegeben werden, so dass die Batterie wieder rechtzeitig zumindest teilweise aufgeladen wird. Auch können zwei oder mehr Energiespeicher parallel oder in Reihe geschaltet werden, um einerseits eine ausreichende Energieversorgung des Elektromotors, andererseits eine ausreichende Speicherkapazität zur Verfügung stellen zu können. Weiterhin kann bei der Überwachung des Batteriezustandes auch eine Umgebungstemperatur miteinfließen. So besteht die Möglichkeit, dass in einem Winterbetrieb andere Werte vorgegeben werden als im Sommerbetrieb.

Vorzugsweise wird der Hybridmotor in einem Fahrzeug eingesetzt, insbesondere in einem Landfahrzeug. Dabei weist der Hybridmotor vorzugsweise den Elektromotor als Anlasser, einen Energiespeicher wie beispielsweise eine Batterie als Lichtmaschine und eine elektronische Parksperre oder Bremse mit Wirkung auf die Kupplung auf.

Gemäß einem weiteren Gedanken der Erfindung wird ein Verfahren zum Betrieb eines Hybridmotors mit einer Verbrennungskraftmaschine und einem Elektromotor vorgeschlagen, die über ein Planetengetriebe miteinander gekoppelt sind, wobei der Elektromotor zum Anlassen der Verbrennungskraftmaschine eingesetzt wird, wenn ein an das Planetengetriebe angeschlossenes Automatikgetriebe blockiert wird. Gemäß einem weiteren Gedanken zu einem Verfahren zum Betrieb des Hybridmotors während eines Startvorgangs der Verbrennungskraftmaschine wird vorgeschlagen, den Verbrennungsmotor durch Zuschaltung einer Kupplung, die geschlossen wird, zu starten. Der Hybridmotor weist hierfür eine Verbindung aus Elektromotor, Verbrennungskraftmaschine, Planetengetriebe, Kupplung und Koppelung mit einem Getriebeeingang auf. Gemäß einer Ausgestaltung ist vorgesehen, dass während einer elektrischen Fahrt durch Zuschaltung der Kupplung, die geschlossen wird, der Verbrennungsmotor gestartet wird. Gemäß einer weiteren Ausgestaltung ist vorgesehen, dass beim Startvorgang eine freigesetzte Massenträgheitsenergie genutzt wird, die Verbrennungskraftmaschine weitgehendst drehmomentneutral zu starten. Vorzugsweise wird beim Startvorgang eine Drehzahl des Elektromotors in Abhängigkeit von einem Übersetzungsverhältnis, insbesondere um die Hälfte, abgesenkt.

Im weiteren werden zusätzliche Betriebsweisen des Hybridmotors vorgeschlagen, die jeweils auch unabhängig vom Anlassvorgang des Hybridmotors ausgeführt werden können. Weiterhin ist beispielsweise vorgesehen, dass über eine Verstellung einer Drehzahl des Elektromotors eine Drehzahl der Verbrennungskraftmaschine geändert wird. Auch kann vorgesehen werden, dass über eine Verstellung einer Drehzahl des Elektromotors eine Drehzahl eines Getriebeeingangs des Automatikgetriebes geändert wird. Eine weitere Ausgestaltung sieht vor, dass eine zwischen einem Getriebeeingang des Automatikgetriebes und dem Planetengetriebe angeordnete Kupplung geschlossen wird, nachdem eine Drehzahl des Elektromotors geändert worden ist, vorzugsweise angehoben worden ist, insbesondere soweit angehoben worden ist, dass diese sich zumindest an eine Drehzahl der Verbrennungskraftmaschine annähert. Vorzugsweise ist bei allen Anwendungen vorgesehen, dass der Elektromotor auch als Generator eingesetzt wird. Hierzu ist eine Steuerung oder Regelung vorgesehen, die beispielsweise anhand eines Lastzustands an der Verbrennungskraftmaschine feststellen kann, ob von Generator- auf Elektromotorbetrieb oder umgekehrt umgeschaltet werden soll. Es können jedoch auch andere Parameter für einen derartigen Wechsel des Betriebes herangezogen werden, wie beispielsweise Batteriezustand, Betätigung eines Gas- und/oder Bremspedals und anderes.

Eine weitere Betriebsweise des Hybridmotors sieht vor, dass für ein regeneratives Bremsen das Automatikgetriebe zurückschaltet und eine Drehzahl des Elektromotors erhöht wird. Auf diese Weise kann ein wirkendes Moment verringert werden, was durch die höhere Drehzahl mittels des Elektromotors aufgenommen werden kann. Eine andere Betriebsweise sieht vor, dass für eine Drehrichtungsänderung an einem Getriebeeingang des Automatikgetriebes eine Drehzahl des Elektromotors soweit geändert wird, bis der Getriebeeingang die Drehrichtungsänderung erfährt.

Weitere vorteilhafte Ausgestaltungen und Weiterbildungen sind in der nachfolgenden Zeichnung näher angegeben. Die dort dargestellten Merkmale sind jedoch nicht beschränkend auszulegen. Vielmehr können sie untereinander wie auch mit den oben beschriebenen Merkmalen zu weiteren Ausgestaltungen verbunden werden. Es zeigt:
- Figur 1: eine erste Ausgestaltung eines Hybridmotors,
- Figur 2: ein Planetenradgetriebe in einer ersten Betriebsweise,
- Figur 3: das Planetengetriebe aus Figur 2 in einer zweiten Betriebsweise,
- Figur 4: das Planetengetriebe aus Figur 3 in einer dritten Betriebsweise,
- Figur 5: eine zweite Ausgestaltung eines Hybridmotors,
- Figur 6: eine beispielhafte erste Darstellung der Drehzahlabhängigkeiten von Elektromotor, Verbrennungskraftmaschine und Getriebeeingang,
- Figur 7: eine beispielhafte zweite Darstellung der Drehzahlabhängigkeiten von Elektromotor, Verbrennungskraftmaschine und Getriebeeingang,
- Figur 8: eine beispielhafte dritte Darstellung der Drehzahlabhängigkeiten von Elektromotor, Verbrennungskraftmaschine und Getriebeeingang,
- Figur 9: das Planetengetriebe aus Figur 1 in einer vierten Betriebsweise,
- Figur 10: eine beispielhafte vierte Darstellung der Drehzahlabhängigkeiten von Elektromotor, Verbrennungskraftmaschine und Getriebeeingang,
- Figur 11: eine beispielhafte fünfte Darstellung der Drehzahlabhängigkeiten von Elektromotor, Verbrennungskraftmaschine und Getriebeeingang und
- Figur 12: das Planetengetriebe aus Figur 1 in einer fünften Betriebsweise.

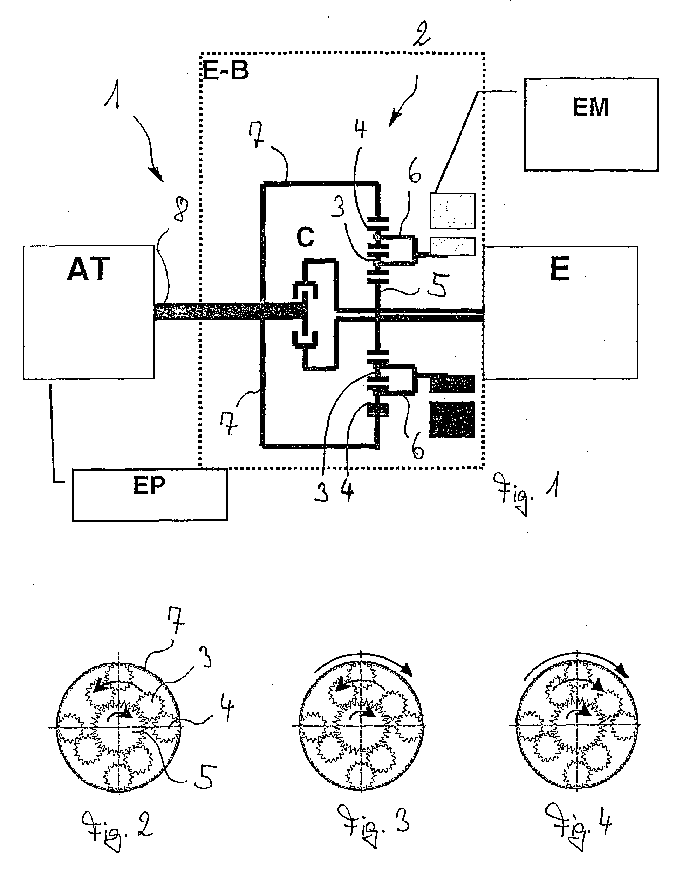

Figur 1 zeigt einen Hybridmotor 1 mit einer Verbrennungskraftmaschine E und einem Elektromotor EM. Dem Elektromotor EM und der Verbrennungskraftmaschine E gegenüber angeordnet ist ein Automatikgetriebe AT. Dem Automatikgetriebe zugeordnet ist eine elektrisch betriebene Ölpumpe EP zur Ölversorgung des Automatikgetriebes. Ein Planetengetriebe weist einen Planentensatz mit doppelten Planetenräder 3, 4. Ein Sonnenrad 5 ist mit der Verbrennungskraftmaschine E verbunden, ein Planetenträger 6 mit dem Elektromotor EM und ein Hohlrad 7 mit einer Welle, insbesondere einem Variator des Automatikgetriebes AT als Getriebeeingang 8. Das Hohlrad 7 umfaßt eine Kupplung C, die eine Verbindung vom Getriebeeingang 8 zum Sonnenrad 5 herstellt. Wird die Kupplung C geschlossen, werden die Verbrennungskraftmaschine E und der Elektromotor miteinander verblockt. Die Kupplung C kann eine Trocken- wie auch eine Nasskupplung sein. Die Anordnung von Verbrennungskraftmaschine E und Elektromotor EM sowie die Ausführung des Planentensatzes können optional geändert werden. Für die nachfolgenden Erläuterungen ist eine Planetensatz mit einer Übersetzung von Sonnenrad 5 zu Hohlrad 7 von -1 gewählt worden. Diese Übersetzung kann jedoch je nach Anforderung angepasst werden. Einzelne Betriebszustände des Systems werden in den folgenden Figuren beschrieben.

Figur 2 zeigt eine Aufsicht auf das Planetengetriebe 2, Dieses weist beispielsweise sechs Planetenräder 3, 4 auf. Es können jedoch auch mehr sein. Die Aufsicht gibt einen Betriebszustand wieder, wie er sich beispielsweise in einem Stillstand des Fahrzeuges und/oder beim Anlassen des Hybridmotors ergibt. Die Umdrehung des Hohlrades 7 und damit des Getriebeeingangs weist den Wert Null auf. Das Sonnenrad 5 und damit die Verbrennungskraftmaschine weist eine Drehzahl auf, die den Wert n hat. Die Planetenräder 3, 4 haben eine derartige Drehzahl, dass die Drehzahl von Elektromotor und Verbrennungskraftmaschine gleich sind, nur mit umgedrehten Vorzeichen. Bei Auslegung des Hybridmotors kann dadurch zumindest angenähert ein Drehmoment für den Getriebeeingang erzielt werden, der sich zu gleichen Anteilen aus einem Drehmoment vom Elektromotor und von der Verbrennungskraftmaschine zusammensetzt.

Figur 3 zeigt den Zustand beim Anfahren des Fahrzeugs. Hierbei dreht sich das Hohlrad mit einer von Null verschiedenen Geschwindigkeit.

Figur 4 zeigt einen Betriebszustand beim Fahren. Der Elektromotor und die Verbrennungskraftmaschine weisen vorzugsweise die gleiche Umdrehungsgeschwindigkeit auf. Ein Schlupf herrscht vorzugsweise nicht.

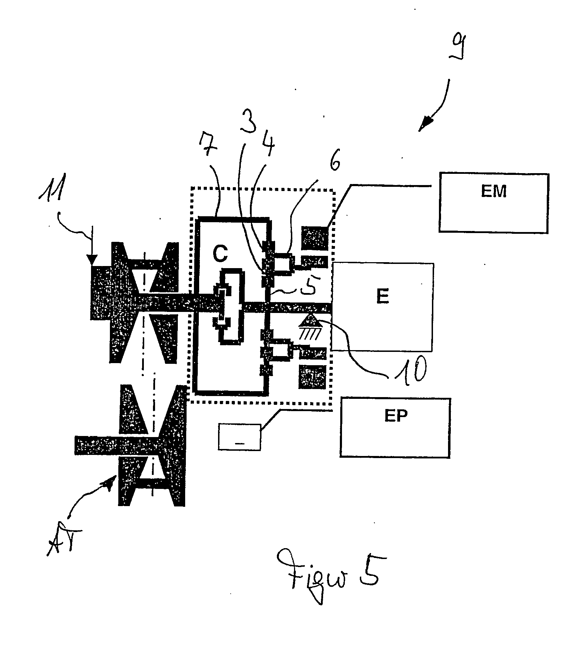

Figur 5 zeigt einen zweiten Hybridmotor 9 in schematischer Ansicht. Gleiche Bauteile wie in Figur 1 sind mit den gleichen Bezugszeichen versehen. Das Automatikgetriebe AT weist keinen vorgelagerten Drehmomentenwandler und keinen Rückwärtsgang auf. Es ist vorzugsweise als CVT-Getriebe ausgebildet. Weiterhin weist der zwei Hybridmotor einen Freilauf 10 auf. Der Freilauf erlaubt der Verbrennungskraftmaschine die Drehung in nur eine Richtung, insbesondere rechtsherum. Weiterhin weist der zweite Hybridmotor eine elektrische Parksperre bzw. Bremse auf, die als Pfeil 11 angedeutet ist. Vorzugsweise ist die elektrische Parksperre in das Automatikgetriebe AT integriert oder zumindest mit dieser gekoppelt.

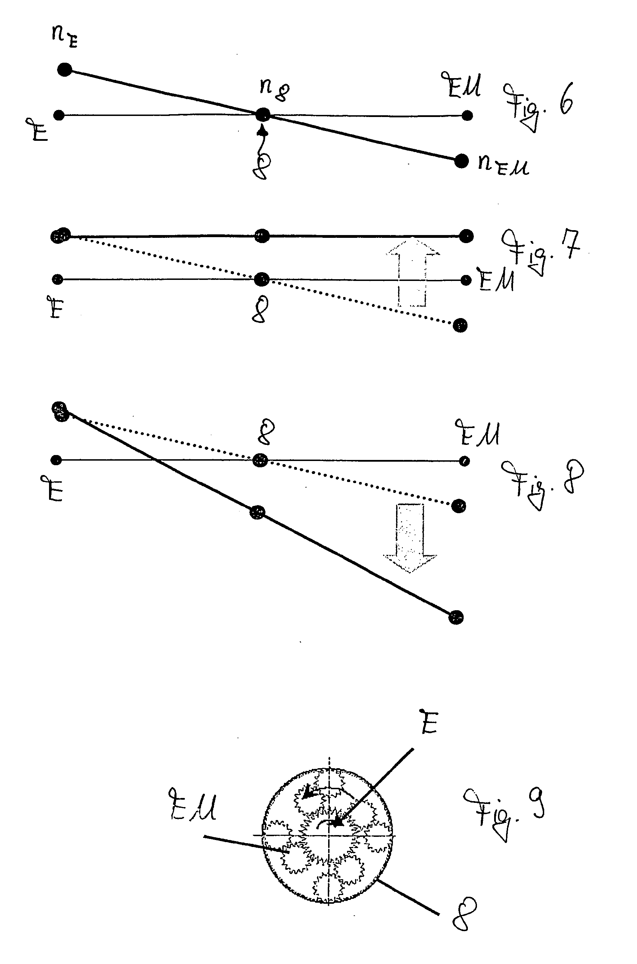

Figur 6 zeigt eine beispielhafte erste Darstellung der Drehzahlabhängigkeiten von Elektromotor EM, Verbrennungskraftmaschine E und Getriebeeingang 8 und zwar im Stillstand und Motorstart im Stillstand. Bei Fahrzeugstillstand wird automatisch die elektrische Parksperre (Bremse) eingelegt. Hierdurch ist der Antrieb des Getriebes blockiert. Wenn der Elektromotor nun linksherum dreht, muss die Verbrennungskraftmaschine zwangsläufig rechts herum gedreht werden, und kann somit gestartet werden. Nach Motorstart ist auch ein Laden der Batterie in P oder N möglich, da das Moment auf die Parksperre/Bremse abgestützt werden kann.

Figur 7 zeigt eine beispielhafte zweite Darstellung der Drehzahlabhängigkeiten von Elektromotor EM, Verbrennungskraftmaschine E und Getriebeeingang 8 und zwar beim Anfahren und bei Konstantfahrt. Wird der Strom im Elektromotor nun auf 0 herunter geregelt, dann bleibt das Fahrzeug beim Lösen der Bremse stehen. Optional kann auch eine Kriechneigung appliziert werden. Beim Anfahren wird die E-Motordrehzahl zuerst auf 0 gefahren. Hierdurch dreht der Getriebeeingang 8 je nach Übersetzung zum Beispiel mit halber Motordrehzahl. Das Antriebsmoment addiert sich aus Motormoment und E-Motormoment. Die Massenträgheitsenergie, die frei wird beim Herunterfahren der E-Motordrehzahl, kann direkt zum Hochbeschleunigen des Verbrennungsmotors eingesetzt werden. Bei annährend gleichen Massenträgheiten verhält das System sich in diese Phase nach Außen als massenträgheitsfrei (Zero Inertia driveline), und löst somit die bisherige Anfahrproblematik bei sogenannten "geared neutral"- Systemen.

Die Drehzahlübersetzung fällt in diese Phase auf 2 ab, in Abhängigkeit von der jeweils gewählten Übersetzung. Hierbei ist zu beachten dass in diesem Betriebspunkt das Moment des Elektromotors und des Verbrennungsmotors gleich sind. Das Antriebsmoment fällt dabei auf das Summenmoment der beiden Antriebsquellen ab.

In der zweite Phase des Anfahrvorgangs wird durch elektrisches Boosten die Elektromotordrehzahl auf annährend Motordrehzahl gebracht. Nun wird die Überbrückungskupplung C bei annährend 0 rpm Schlupf geschlossen. Nachdem die Kupplung geschlossen wurde, ist das komplette System verblockt. Nun kann der Elektromotor wahlweise als Generator oder weiterhin als Booster betrieben werden. In diesem Betriebszustand ist die Funktion vergleichbar mit einem herkömmlichen Starter/Generatorsystem, insbesondere unter Nutzung einer Kurbelwelle als Starter.

Figur 8 zeigt eine beispielhafte dritte Darstellung der Drehzahlabhängigkeiten von Elektromotor EM, Verbrennungskraftmaschine E und Getriebeeingang 8 und zwar beim Rückwärts fahren. Wird die Elektromotordrehzahl beim Anfahren weiter abgesenkt, anstatt auf 0 gefahren, dann schiebt sich der Pol vom Getriebeeingang unter 0 rpm, Somit dreht der Getriebeeingang rückwärts, und das Fahrzeug kann Rückwärtsfahren. Der sonst im CVT-Getriebe übliche Planentensatz mit Vor- und Rückwärtskupplung kann hierdurch komplett entfallen. Der Entfall der Rückwärtsfahrelemente im Getriebe trifft auch zu, wenn ein anderes Getriebekonzept nachgeschaltet wird. Das Konzept sieht vor beim Rückwärtsgang hochzuschalten oder in einem höheren Gang zu starten, da auf Grund der niedrigen Gesamtübersetzung rückwärts sonst nur eine begrenzte Rückfahrgeschwindigkeit möglich wäre.

Figur 9 zeigt das Planetengetriebe aus Figur 1 in einer Betriebsweise, bei der beispielsweise eine Rückwärtsfahrt ermöglicht wird.

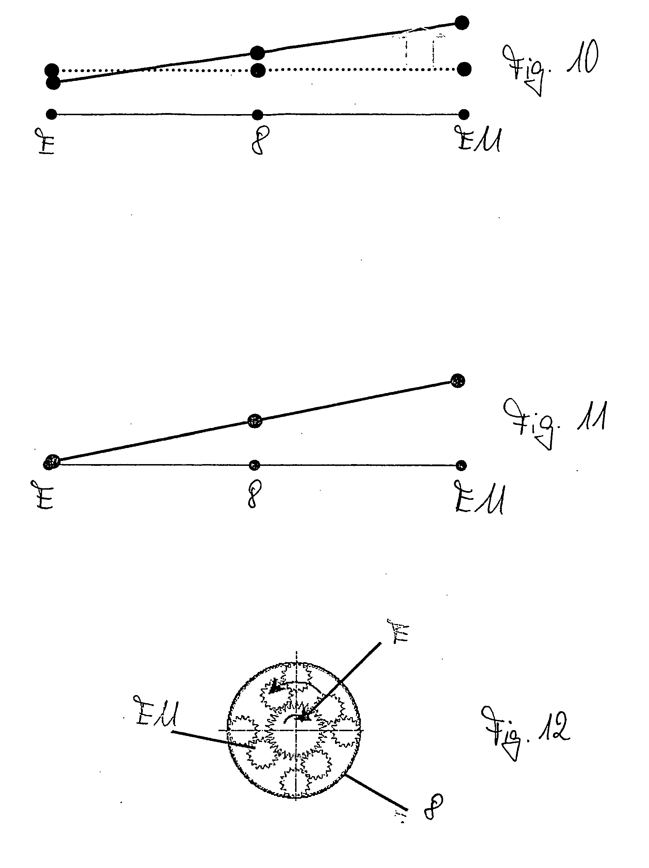

Figur 10 zeigt eine beispielhafte vierte Darstellung der Drehzahlabhängigkeiten von Elektromotor EM, Verbrennungskraftmaschine E und Getriebeeingang 8 und zwar beim regenerativen Bremsen. Sobald das Fahrzeug in Schub geht, kann die Überbrückungskupplung geöffnet werden. Hierdurch fällt der Verbrennungsmotor auf Leerlaufdrehzahl ab. Demzufolge steigt die Elektromotordrehzahl an. Wird zusätzlich vom Automatikgetriebe zurückgeschaltet, so kann die Drehzahl des Elektromotors noch weiter erhöht werden. Dadurch können kleinere Drehmomente abgegriffen werden. Das abgreifbare Drehmoment des Elektromotors wird begrenzt durch das Schubmoment vom Verbrennungsmotor.

Figur 11 zeigt eine beispielhafte fünfte Darstellung der Drehzahlabhängigkeiten von Elektromotor EM, Verbrennungskraftmaschine E und Getriebeeingang 8 und zwar beim elektrischen Fahren und beim Motorstart während der Fahrt. Das Konzept ist optional mit einem Freilauf an der Kurbelwelle das Verbrennungsmotors ausgestattet. Mit dieser zusätzliche Vorrichtung kann nun auch rein elektrisch gefahren werden, indem der Elektromotor mit einer positiven Drehzahl beaufschlagt wird. Soll während der elektrischen Fahrt der Verbrennungsmotor zugeschaltet werden müssen, dann muss lediglich die Überbrückungskupplung geschlossen werden. Während des Schließvorgangs sinkt die Drehzahl des Elektromotors um die Hälfte ab. Die Massenträgheitsenergie, die hierbei freigesetzt wird, kann wirkungsvoll genutzt werden, um den Verbrennungsmotor weitgehend drehmomentneutral (bezogen auf das Abtriebsmoment) zu starten.

Figur 12 zeigt das Planetengetriebe aus Figur 1 in einer fünften Betriebsweise, insbesondere regenerativen Bremsen.

Durch Kombination der o.g. Betriebsstrategien ist ein freies Ein- und Ausschalten des Verbrennungsmotors möglich. Bei gegebenen Fahrzeugvoraussetzungen (elektrische Servolenkung,...) kann auch während der Fahrt der Motor ausgeschaltet werden.

Die Erfindung stellt ein einfaches Hybridkonzept mit nahezu alle Freiheitsgerade vor, wie unter 3 beschreiben. Die Tabelle 1 zeigt die entfallende und neu hinzugekommene Komponenten im Triebstrang am Beispiel einer CVT Anwendung.

**Tabelle 1: Vergleich Hybridsystem mit herkömmliches System**

| **Neue Komponenten** | **Entfallende Komponenten** |
|---|---|
| Elektromotor | Anlasser |
| Energiespeicher (z.B. Batterie) | Lichtmaschine |
| Leistungselektronik | Drehmomentwandler mit Überbrückung |
| Elektronische Parksperre/Bremse | Kupplung vorwärts |
| | Kupplung Rückwärts |
| | Fahrzeugbatterie |

Der Planentensatz der normalerweise zum Rückwärtsfahren verwendet wird ist im neuen Konzept anders geschaltet und funktioniert nun als Anfahrelement

Der Vergleich zeigt dass das Konzept weitgehend gewichts- und kostenneutral umgesetzt werden kann, da einige teurer und schwere Komponenten nicht mehr benötigt werden (Wandler, Kupplungen, Batterie)

## Patentansprüche

1. Hybridmotor (1; 9) mit einer Verbrennungskraftmaschine (E) und mit einem Elektromotor (EM), die über ein Planetengetriebe miteinander in Verbindung stehen, wobei eine Kupplung derart angeordnet ist, dass die Verbrennungskraftmaschine (E) und der Elektromotor (EM) über ein Sonnenrad (5) und einem Planetenträger (6) miteinander verbunden sind, wobei das Sonnenrad (5) mit dem Elektromotor (EM) und die Verbrennungskraftmaschine (E) mit dem Planetenträger (6) verbunden ist und eine Welle vorhanden ist, die in direkter Verbindung mit einem Getriebeeingang (8) eines Automatikgetriebes steht, wobei das Hohlrad (7) sich auf dieser Welle abstützt **dadurch gekennzeichnet, dass** eine Kurbelwelle des Verbrennungsmotors mit einem Freilauf versehen ist.

2. Hybridmotor (1; 9) mit einer Verbrennungskraftmaschine (E) und mit einem Elektromotor (EM) nach Anspruch 1, **dadurch gekennzeichnet, dass** diese mittels einer Kupplung (C) verblockbar sind und über ein Planetengetriebe miteinander in Verbindung stehen, wobei das Planetengetriebe doppelte Planetenträger (6) aufweist.

3. Hybridmotor (1; 9) nach Anspruch 2, **dadurch gekennzeichnet, dass** die Kupplung derart angeordnet ist, dass die Verbrennungskraftmaschine (E) und der Elektromotor (EM) über ein Sonnenrad (5) und einem Planetenträger (6) bei Betätigung dieser Kupplung (C) miteinander verblockt sind.

4. Hybridmotor (1; 9) nach Anspruch 2 oder 3, **dadurch gekennzeichnet, dass** die Kupplung (C) zwischen einer Kopplung zu einem Getriebeeingang (8) insbesondere eines Automatikgetriebes und dem Planetengetriebe angeordnet ist.

5. Hybridmotor (1; 9) nach einem der vorhergehenden Ansprüche, **dadurch gekennzeichnet, dass** die Kupplung (C) zwischen einem Automatikgetriebe (AT) und dem Planetengetriebe angeordnet ist.

6. Hybridmotor (1; 9) nach einem der vorhergehenden Ansprüche, **dadurch gekennzeichnet, dass** die Kupplung (C) in das Planetengetriebe integriert ist.

7. Hybridmotor (1; 9) nach einem der vorhergehenden Ansprüche, **dadurch gekennzeichnet, dass** ein Planetensatz einem Automatikgetriebe (AT) vorgeschaltet ist.

8. Hybridmotor (1; 9) nach einem der vorhergehenden Ansprüche, **dadurch gekennzeichnet, dass** die Kupplung (C) das Sonnenrad (5) und den Getriebeeingang (8) des Automatikgetriebes direkt miteinander verbindet.

9. Hybridmotor (1; 9) nach einem der vorhergehenden Ansprüche 1, **dadurch gekennzeichnet, dass** das Automatikgetriebe (AT) ein CVT-Getriebe ist.

10. Hybridmotor (1; 9) nach Anspruch 1, **dadurch gekennzeichnet, dass** das Automatikgetriebe (AT) mit einer Welle der Kupplung ohne Zwischenschaltung eines Drehmomentenwandlers direkt verbunden ist.

11. Hybridmotor (1; 9) nach Anspruch 1, **dadurch gekennzeichnet, dass** eine elektrische Ölpumpe zur Ölversorgung des Automatikgetriebes eingesetzt wird.

12. Hybridmotor (1; 9) nach Anspruch 1, **dadurch gekennzeichnet, dass** der Elektromotor (EM) zumindest als Anlasser und als Booster dient.

13. Hybridmotor (1; 9) nach Anspruch 1, **dadurch gekennzeichnet, dass** das Automatikgetriebe (AT) ohne einen Rückwärtsgang ausgelegt ist.

14. Hybridmotor (1; 9) nach Anspruch 1 in einem Fahrzeug, **dadurch gekennzeichnet, dass** der Elektromotor (EM) als Anlasser, ein Energiespeicher als Lichtmaschine und eine elektronische Parksperre oder Bremse mit Wirkung auf die Kupplung vorgesehen sind.

15. Hybridmotor (1; 9) nach Anspruch 1 oder 2 in einem Fahrzeug, **dadurch gekennzeichnet, dass** mit einer Verbindung aus Elektromotor, Verbrennungskraftmaschine, Planetengetriebe, Kupplung und Koppelung mit einem Getriebeeingang, wobei über eine Änderung einer Drehzahl des Elektromotors eine Änderung einer Drehrichtung des Getriebeeingangs bewirkbar ist, wobei eine Rückwärtsfahrt allein durch Einstellung des Elektromotors ermöglicht ist.

16. Verfahren zum Betrieb eines Hybridmotors nach Anspruch 1, mit einer Verbrennungskraftmaschine (E) und einem Elektromotor (EM), die über ein Planetengetriebe miteinander gekoppelt sind, wobei der Elektromotor (EM) zum Anlassen der Verbrennungskraftmaschine (E) eingesetzt wird, wenn ein an das Planetengetriebe angeschlossenes Automatikgetriebe (AT) blockiert wird.

17. Verfahren zum Betrieb eines Hybridmotors insbesondere nach Anspruch 16 in einem Startvorgang der Verbrennungskraftmaschine, wobei der Hybridmotor (1; 9) eine Verbindung aus Elektromotor (EM), Verbrennungskraftmaschine (E), Planetengetriebe, Kupplung (C) und Koppelung mit einem Getriebeeingang (8) aufweist, wobei der Verbrennungsmotor (E) durch Zuschaltung der Kupplung (C), die geschlossen wird, startet, wobei beim Startvorgang eine freigesetzte Massenträgheitsenergie genutzt wird, die Verbrennungskraftmaschine (E) weitgehendst drehmomentneutral zu starten.

18. Verfahren nach Anspruch 17, **dadurch gekennzeichnet, dass** während einer elektrischen Fahrt durch Zuschaltung der Kupplung (C), die geschlossen wird, die Verbrennungskraftmaschine (E) gestartet wird.

19. Verfahren nach einem der vorhergehenden Ansprüche, **dadurch gekennzeichnet, dass** beim Startvorgang eine Drehzahl des Elektromotors (EM) in Abhängigkeit von einem Übersetzungsverhältnis, insbesondere um die Hälfte, abgesenkt wird.

20. Verfahren nach einem der vorhergehenden Ansprüche, **dadurch gekennzeichnet, dass** über eine Verstellung einer Drehzahl des Elektromotors (EM) eine Drehzahl der Verbrennungskraftmaschine (E) geändert wird.

21. Verfahren nach einem der vorhergehenden Ansprüche, **dadurch gekennzeichnet, dass** über eine Verstellung einer Drehzahl des Elektromotors (EM) eine Drehzahl eines Getriebeeingangs des Automatikgetriebes (AT) geändert wird.

22. Verfahren nach einem der vorhergehenden Ansprüche, **dadurch gekennzeichnet, dass** eine zwischen einem Getriebeeingang (8) des Automatikgetriebes (AT) und dem Planetengetriebe angeordnete Kupplung (C) geschlossen wird, nachdem eine Drehzahl des Elektromotors geändert worden ist, vorzugsweise angehoben worden ist, insbesondere soweit angehoben worden ist, dass diese sich zumindest an eine Drehzahl der Verbrennungskraftmaschine (E) annähert.

23. Verfahren nach einem der vorhergehenden Ansprüche, **dadurch gekennzeichnet, dass** der Elektromotor (EM) als Generator eingesetzt wird.

24. Verfahren nach einem der vorhergehenden Ansprüche, **dadurch gekennzeichnet, dass** für ein regeneratives Bremsen das Automatikgetriebe (AT) zurückschaltet und eine Drehzahl des Elektromotors (EM) erhöht.

25. Verfahren nach einem der vorhergehenden Ansprüche, **dadurch gekennzeichnet, dass** für eine Drehrichtungsänderung an einem Getriebeeingang (8) des Automatikgetriebes eine Drehzahl des Elektromotors (EM) soweit geändert wird, bis der Getriebeeingang (8) die Drehrichtungsänderung erfährt.

26. Verfahren nach einem der vorhergehenden Ansprüche, **dadurch gekennzeichnet, dass** der Hybridmotor (1; 9) in einem Fahrzeug, insbesondere einem Landfahrzeug eingesetzt wird.

## Claims

1. A hybrid engine (1; 9) with an internal combustion engine (E) and an electric motor (EM), that are connected to one another by means of a planetary gear, wherein a clutch is arranged such that the internal combustion engine (E) and the electric motor (EM) are connected to one another by means of a sun wheel (5) and a planetary carrier (6), wherein the sun wheel (5) is connected to the electric motor (EM) and the internal combustion engine (E) is connected to the planetary carrier (6), whereby a shaft is provided that is directly connected to a transmission input (8) of an automatic transmission, and the annulus gear (7) is supported on this shaft, **characterized in that** a crankshaft of the internal combustion engine is provided with a freewheel.

2. A hybrid engine (1; 9) with an internal combustion engine (E) and an electric motor (EM) according to claim 1, **characterized in that** the internal combustion engine (E) and the electric motor (EM) can be interlocked by means of a clutch (C) and are connected to one another by means of a planetary gear, wherein the planetary gear features double planetary carriers (6).

3. A hybrid engine (1; 9) according to claim 2, **characterized in that** the clutch is arranged such that the internal combustion engine (E) and the electric motor (EM) are interlocked by means of a sun wheel (5) and a planetary carrier (6) when this clutch (C) is actuated.

4. A hybrid engine (1; 9) according to claims 2 and 3, **characterized in that** the clutch (C) is arranged between a coupling to a transmission input (8), particularly of an automatic transmission, and the planetary gear.

5. A hybrid engine (1; 9) according to one of the preceding claims, **characterized in that** the clutch (C) is arranged between the automatic transmission (AT) and the planetary gear.

6. A hybrid engine (1; 9) according to one of the preceding claims, **characterized in that** the clutch (C) is integrated into the planetary gear.

7. A hybrid engine (1; 9) according to one of the preceding claims, **characterized in that** a planetary gear set is arranged upstream of an automatic transmission (AT).

8. A hybrid engine (1; 9) according to one of the preceding claims, **characterized in that** the clutch (C) directly connects the sun wheel (5) and the transmission input (8) of the automatic transmission to one another.

9. A hybrid engine (1; 9) according to one of the preceding claims, **characterized in that** the automatic transmission (AT) is a CVT transmission.

10. A hybrid engine (1; 9) according claim 1, **characterized in that** the automatic transmission (AT) is directly connected to a shaft of the clutch without an intermediate torque converter.

11. A hybrid engine (1; 9) according to claim 1, **characterized in that** an electric oil pump is used for supplying the automatic transmission with oil.

12. A hybrid engine (1; 9) according to claim 1, **characterized in that** the electric motor (EM) serves at least as a starter and as a booster.

13. A hybrid engine (1; 9) according to claim 1, **characterized in that** the automatic transmission (AT) is realized without a reverse gear.

14. A hybrid engine (1; 9) according to claim 1 in a vehicle, **characterized in that** the electric motor (EM) as a starter, an energy storage as a generator and an electronic parking brake or brake acting upon the clutch are provided.

15. A hybrid engine (1; 9) according to claim 1 or 2 in a vehicle, **characterized by** a connection of the electric motor, the internal combustion engine, the planetary gear and the clutch as well as a coupling to a transmission input, wherein a change in the rotating direction of the transmission input can be achieved by varying the speed of the electric motor, and wherein reversing can be realized by adjusting the electric motor only.

16. A method for operating a hybrid engine according to claim 1, with an internal combustion engine (E) and an electric motor (EM) that are coupled to one another by means of a planetary gear, wherein the electric motor (EM) is used for starting the internal combustion engine (E) when an automatic transmission (AT) connected to the planetary gear is blocked.

17. A method for operating a hybrid engine, particularly according to claim 16, while starting the internal combustion engine, wherein the hybrid engine (1; 9) features a connection of the electric motor (EM), the internal combustion engine (E), the planetary gear and the clutch (C) as well as a coupling to a transmission input (8), wherein the internal combustion engine (E) is started by connecting the clutch (C), and wherein a mass energy of inertia released during the starting process is used for starting the internal combustion engine (E) with a largely neutral torque.

18. A method according to claim 17, **characterized in that** the internal combustion engine (E) is started in the electric driving mode by connecting the clutch (C).

19. A method according to one of the preceding claims, **characterized in that** a speed of the electric motor (EM) is lowered during the starting process in dependence on a transmission ratio, particularly by one-half.

20. A method according to one of the preceding claims, **characterized in that** a speed of the internal combustion engine (E) is varied by adjusting a speed of the electric motor (EM).

21. A method according to one of the preceding claims, **characterized in that** a speed of a transmission input of the automatic transmission (AT) is varied by adjusting a speed of the electric motor (EM).

22. A method according to one of the preceding claims, **characterized in that** a clutch (C) arranged between a transmission input (8) of the automatic transmission (AT) and the planetary gear is connected after a speed of the electric motor was varied, preferably increased, particularly to such a degree that it at least approximately corresponds to a speed of the internal combustion engine (E).

23. A method according to one of the preceding claims, **characterized in that** the electric motor (EM) is used as a generator.

24. A method according to one of the preceding claims, **characterized in that** the automatic transmission (AT) is down-shifted and a speed of the electric motor (EM) is increased for a regenerative braking maneuver.

25. A method according to one of the preceding claims, **characterized in that** a change in the rotating direction of a transmission input (8) of the automatic transmission is achieved by varying a speed of the electric motor (EM) until the transmission input (8) changes the rotating direction.

26. A method according to one of the preceding claims, **characterized in that** the hybrid engine (1; 9) is used in a vehicle, particularly a land craft.

## Revendications

1. Moteur hybride (1 ; 9) avec un moteur à combustion interne (E) et un moteur électrique (EM), qui sont reliés l'un à l'autre par un engrenage planétaire, un embrayage étant disposé de telle sorte que le moteur à combustion interne (E) et le moteur électrique (EM) sont reliés entre eux par une roue solaire (5) et un porte-planétaire (6), ladite roue solaire (5) étant reliée au moteur électrique (EM) et le moteur à combustion interne (E) étant relié au porte-planétaire (6), et il est prévu un arbre qui est en liaison directe avec une entrée (8) d'une boîte de vitesses automatique, la couronne (7) prenant appui sur cet arbre, **caractérisé en ce qu'**un vilebrequin du moteur à combustion interne possède une course libre.

2. Moteur hybride (1 ; 9) avec un moteur à combustion interne (E) et un moteur électrique (EM) selon la revendication 1, **caractérisé en ce que** ceux-ci peuvent être assemblés en bloc au moyen d'un embrayage (C) et sont reliés l'un à l'autre par un engrenage planétaire, l'engrenage planétaire comportant un double porte-planétaire (6).

3. Moteur hybride (1 ; 9) selon la revendication 2, **caractérisé en ce que** l'embrayage est monté de telle sorte que le moteur à combustion interne (E) et le moteur électrique (EM) sont assemblés en bloc l'un à l'autre par l'intermédiaire d'une roue solaire (5) et d'un porte-planétaire (6) lors de l'actionnement de cet embrayage (C).

4. Moteur hybride (1 ; 9) selon la revendication 2 ou 3, **caractérisé en ce que** l'embrayage (C) est monté entre un couplage vers une entrée (8) de boîte de vitesses, en particulier d'une boîte de vitesses automatique, et l'engrenage planétaire.

5. Moteur hybride (1 ; 9) selon l'une quelconque des revendications précédentes, **caractérisé en ce que** l'embrayage (C) est monté entre une boîte de vitesses automatique (AT) et l'engrenage planétaire.

6. Moteur hybride (1 ; 9) selon l'une quelconque des revendications précédentes, **caractérisé en ce que** l'embrayage (C) est intégré dans l'engrenage planétaire.

7. Moteur hybride (1 ; 9) selon l'une quelconque des revendications précédentes, **caractérisé en ce que** un train planétaire est monté en amont d'une boîte de vitesses automatique (AT).

8. Moteur hybride (1 ; 9) selon l'une quelconque des revendications précédentes, **caractérisé en ce que** l'embrayage (C) relie directement l'un à l'autre la roue solaire (5) et l'entrée (8) de la boîte de vitesses automatique.

9. Moteur hybride (1 ; 9) selon l'une quelconque des revendications précédentes, **caractérisé en ce que** la boîte de vitesses automatique (AT) est une boîte de vitesses à variation continue (CVT).

10. Moteur hybride (1 ; 9) selon la revendication 1, **caractérisé en ce que** la boîte de vitesses automatique (AT) est reliée directement à un arbre de l'embrayage sans montage intercalé d'un convertisseur de couple.

11. Moteur hybride (1 ; 9) selon la revendication 1, **caractérisé en ce qu'**une pompe à huile est utilisée pour l'alimentation en huile de la boîte de vitesses automatique.

12. Moteur hybride (1 ; 9) selon la revendication 1, **caractérisé en ce que** le moteur électrique (EM) fait au moins fonction de démarreur et de suramplificateur.

13. Moteur hybride (1 ; 9) selon la revendication 1, **caractérisé en ce que** la boîte de vitesses automatique (AT) est configurée sans un rapport de marche arrière.

14. Moteur hybride (1 ; 9) selon la revendication 1 dans un véhicule, **caractérisé en ce que** le moteur électrique (EM) est prévu comme démarreur, un accumulateur d'énergie est prévu comme génératrice et un frein de stationnement ou frein électronique est prévu avec action sur l'embrayage.

15. Moteur hybride (1 ; 9) selon la revendication 1 ou 2 dans un véhicule, **caractérisé en ce qu'**il comporte une liaison formée par un moteur électrique, un moteur à combustion interne, un engrenage planétaire, un embrayage et un couplage avec une entrée de boîte de vitesses, une variation du sens de rotation de l'entrée de boîte de vitesses pouvant être induite par une variation d'une vitesse de rotation du moteur électrique, une marche arrière étant possible seulement par le réglage du moteur électrique.

16. Procédé de fonctionnement d'un moteur hybride selon la revendication 1, comportant un moteur à combustion interne (E) et un moteur électrique (EM), qui sont reliés l'un à l'autre par un engrenage planétaire, le moteur électrique (EM) étant utilisé pour démarrer le moteur à combustion interne (E), lorsqu'une boîte de vitesses automatique (AT), raccordée à l'engrenage planétaire, est amenée en position bloquée.

17. Procédé de fonctionnement d'un moteur hybride, en particulier selon la revendication 16 dans un processus de démarrage du moteur à combustion interne, le moteur hybride (1 ; 9) comportant une liaison formée par un moteur électrique (EM), un moteur à combustion interne (E), un engrenage planétaire, un embrayage (C) et un couplage avec une entrée (8) de boîte de vitesses, le moteur à combustion interne (E) étant mis en marche sous l'effet de l'intervention de l'embrayage (C) qui est amené en position fermée, sachant qu'une énergie d'inertie de masse, libérée pendant le processus de démarrage, est utilisée pour mettre en marche le moteur à combustion interne (E) en grande partie de manière neutre en couple de rotation.

18. Procédé selon la revendication 17, **caractérisé en ce que**, pendant un déplacement électrique, le moteur à combustion interne (E) est mis en marche par l'intervention de l'embrayage (C) qui est amené en position fermée.

19. Procédé selon l'une quelconque des revendications précédentes, **caractérisé en ce que** pendant le processus de démarrage, une vitesse de rotation du moteur électrique (EM) est diminuée, en particulier de la moitié, en fonction d'un rapport de changement de vitesse.

20. Procédé selon l'une quelconque des revendications précédentes, **caractérisé en ce qu'**un réglage d'une vitesse de rotation du moteur électrique (EM) permet d'induire une variation de la vitesse de rotation du moteur à combustion interne (E).

21. Procédé selon l'une quelconque des revendications précédentes, **caractérisé en ce qu'**un réglage d'une vitesse de rotation du moteur électrique (EM) permet d'induire une variation de la vitesse de rotation d'une entrée de la boîte de vitesses automatique (AT).

22. Procédé selon l'une quelconque des revendications précédentes, **caractérisé en ce qu'**un embrayage (C), monté entre une entrée (8) de la boîte de vitesses automatique (AT) et l'engrenage planétaire, est amené en position fermée après qu'une vitesse de rotation du moteur électrique a été modifiée, de préférence augmentée, en particulier augmentée jusqu'à ce que celle-ci se rapproche au moins d'une vitesse de rotation du moteur à combustion interne (E).

23. Procédé selon l'une quelconque des revendications précédentes, **caractérisé en ce que** le moteur électrique (EM) est utilisé comme génératrice.

24. Procédé selon l'une quelconque des revendications précédentes, **caractérisé en ce que** pour un freinage à récupération, la boîte de vitesses automatique (AT) est amenée dans le rapport de vitesse précédent et une vitesse de rotation du moteur électrique (EM) est augmentée.

25. Procédé selon l'une quelconque des revendications précédentes, **caractérisé en ce que** pour faire varier le sens de rotation sur une entrée (8) de la boîte de vitesses automatique, une vitesse de rotation du moteur électrique (EM) est modifiée jusqu'à ce que la variation du sens de rotation soit appliquée à l'entrée (8) de la boîte de vitesses.

26. Procédé selon l'une quelconque des revendications précédentes, **caractérisé en ce que** le moteur hybride (1 ; 9) est monté dans un véhicule, en particulier un véhicule tout terrain.
